# EUROPEAN PATENT APPLICATION

(11) **EP 2 706 494 A1**
(43) Date of publication of application: **12.03.2014**
(21) Application number: 13183525.8
(22) Date of filing: 09.09.2013
(51) Int. Cl.: G06Q 10/10

(54) **Energy efficient display of control events of an industrial automation system**

(30) Priority: 10.09.2012 US 201213608823
(71) Applicant: SAP AG, 69190 Walldorf (DE)
(72) Inventor: Abdukalykov, Rolan, 69190 Walldorf (DE); El-Jayousi, Mohannad, 69190 Walldorf (DE); Gauthier, Alain, 69190 Walldorf (DE); Ghorayeb, Roy, 69190 Walldorf (DE); Lavoie, Vincent, 69190 Walldorf (DE); Liang, Xuebo, 69190 Walldorf (DE)
(74) Representative: Richardt Patentanwälte GbR

(57) **Abstract**

The invention relates to a method for visualizing calendar objects stored in a backend system (30; 50) in a user specific application of a portable touch-screen device (10), wherein the calendar objects comprise data, wherein the backend system (30; 50) comprises customized categories of the data, the categories being specific for the user, the method comprising at the backend system (30; 50):
receiving a request for at least part of the calendar objects from the application;
retrieving the requested calendar objects stored in the backend system (30; 50);
retrieving the user specific categories;
selecting a first part of the data of the calendar objects according to the customized categories;
providing the selected data and at least part of the customized categories as a response to the request to the application.

## Description

### BACKGROUND INFORMATION

Industrial automation systems typically comprise a plurality of individual components which operation needs to be controlled. For example, operation of the components typically involves certain time periods in which the components like motors or valves are energized at certain levels. In order to simplify the control of these components, visualization of the events is helpful. Since often portable devices are used to visualize the events, the visualization process needs to be energy efficient: while portability of devices is a great benefit, challenges arise from the limited amount of energy available at such touch screen devices when operated in battery mode.

It is therefore an objective to provide for a method which permits for an energy efficient display of control events of an industrial automation system, a respective device and a computer program product.

Described is a method for visualizing calendar objects stored in a backend system in a user specific application of a portable touch-screen device, wherein the calendar objects comprise data, wherein the backend system comprises customized categories of the data, the categories being specific for the user, the method comprising at the backend system:
receiving a request for at least part of the calendar objects from the application;
retrieving the requested calendar objects stored in the backend system;
retrieving the user specific categories;
selecting a first part of the data of the calendar objects according to the customized categories;
providing the selected data and at least part of the customized categories as a response to the request to the application.

Embodiments of the invention may have the advantage that the requirements for data processing at the portable device are reduced. Further, the amount of data transmitted from the backend system to the device is reduced. Thus, the available resources for data processing at the portable device may be kept limited to a minimum level. The portable device may receive only what is absolutely required by the device to visualize the calendar objects stored in a backend system in a manner required for the specific user. Typically, the calendar objects will comprise a wide variety of data which may not be actually required by the user.

A calendar object may be understood as any set of information required for controlling a machine of an industrial automation system, wherein the information is valid for a certain time interval.

For example, a user may be a person responsible for only checking the correctness of parameters used at a certain machine used for an industrial automation process. For example, a respective calendar object will comprise information that each Monday the lubricant of machine xyz should be refilled to a predefined level. The device of said person responsible for checking the correctness of the filling level will thus only receive a calendar entity with data relating to Monday and the predefined filling level. On the other hand, said respective calendar object may further comprise historical data on previous filling levels, control instructions to control the lubricant refilling process etc. However, since for the above mentioned user said additional data is irrelevant, the backend system will limit the selected data of the respective calendar object to the category "checking". Thus, the amount of data provided to the user's device is limited to said data.

By also providing at least part of the customized categories as a response to the request to the application, the application is able to deal in a predefined way with the data.

In accordance with an embodiment of the invention, a part of the categories is associated with instructions for translating of the selected data into a user specific format, wherein the method further comprises translating by the backend system at least part of the selected data according to the user specific instructions.

This may have the advantage that the data formats used at the backend system and at the device can be differently adapted according to the individual data processing requirements: for example, the data format at the backend system may be a format which is optimized for preprocessing of the data or which may be optimized for an indexable storing of the data in a database. Contrary, the data format at the device may be optimized for fast and energy saving visual representation of the data at the device.

In accordance with an embodiment of the invention, the selected data of the calendar objects has a smaller data size than the original data size of the calendar objects. This may speed up the process of providing the relevant data from the backend system to the device since the amount of data to be transferred is reduced and adapted to the individual needs of the user at the device. Further, the device is disburdened from the process of extracting part of the received data that is relevant for visual representation at the device.
In accordance with an embodiment of the invention, a category of the customized categories comprises instructions to the application how to handle the selected data of the calendar objects, wherein said instructions are comprised in the provided part of the customized categories. For example, the instructions how to handle the selected data of the calendar objects comprises instructions how to render the selected data on a graphical user interface (GUI) of the portable touch-screen device and/or how to react to a user input at the portable touch-screen device, wherein the input is related to the selected data and/or how to perform an analysis of the selected data in response to a request of a user of the application.
This may have the advantage that the design of the application does not have to be adapted to the data to be displayed at a graphical user interface of the device. It is sufficient to provide the application with basic functionalities for receiving and rendering the received data. Any details of how to render the data for visual representation at the device, how to react on certain user actions performed on the data or how to further process the data at the device are provided independent of the application by the backend system. Thus, even with changed or updated requirements on the handling of the data, the application may remain untouched and unchanged.
It has to be noted that instructions how to render the selected data may comprise a predefined arrangement of parts of the data on the GUI. Further, this may comprise and graphical representation regarding parts of said data. A graphical representation may comprise certain colours, text format (bold, italic etc.), certain diagram styles for data representation like histograms, pie charts etc.
Instructions how to react to a user input at the portable touch-screen device may comprise the provision of a pop-up element on the GUI upon a user selection of a certain part of the displayed data. The pop-up element may comprise further additional information on the calendar object. It has to be noted that the provision of the pop-up element may further comprise another request for a further part of the calendar objects from the backend server. Thus, by using pop-ups, additional information on the calendar objects is retrieved on demand from the backend system (for example the second part of the data discussed below). This may limit the amount of data transmitted to the device to a minimum. Data is only transmitted on demand. The initial request for at least part of the calendar objects from the application may only serve the purpose to provide the user a minimum amount of information required as basis for any further demands regarding the calendar objects based on said information.

In accordance with an embodiment of the invention, the instructions how to handle the selected data of the calendar objects comprises an authorization scheme for modifying and/or viewing the selected data by the user of the application at the application. This may have the advantage that from side of the backend system a control of the data handling is possible in a user specific manner. In the above example of a lubricant refill control, the predefined level may be comprised in the calendar object data, by only modifiable by an administrator user and not a user responsible for checking the lubricant level.

In accordance with an embodiment of the invention, a part of the categories is associated with instructions for preprocessing of a second part of the data of the calendar objects, wherein the method further comprises at the backend system preprocessing the second part of the data of the calendar objects for obtaining preprocessed data and providing the preprocessed data as the response to the request to the application.

This may have the advantage that the data processing capabilities at the device can be kept to a rather low level. Data analysis can be dedicated to the powerful backend system. Thus, especially for the use case in which a multitude of devices is coupled to the backend system, the total resource requirements of the total system (backend plus devices) can be minimized. For example, the preprocessed data comprise image data. Thus, the calculation of the image data is dedicated to the powerful backend system, whereas the device is only responsible for pure display and rendering of the readily available image data provided by the backend system.

In another aspect, the invention relates to a backend system for visualizing calendar objects stored in a backend system in a user specific application of a portable touch-screen device, wherein the calendar objects comprise data, wherein the backend system comprises customized categories of the data, the categories being specific for the user, the backend system comprising a processor for controlling the backend system and a memory for storing machine executable instructions, wherein execution of the instructions causes the processor to:
receiving a request for at least part of the calendar objects from the application;
retrieving the requested calendar objects stored in the backend system;
retrieving the user specific categories;
selecting a first part of the data of the calendar objects according to the customized categories;
providing the selected data and at least part of the customized categories as a response to the request to the application.

In another aspect, the invention relates to a method for visualizing calendar objects stored in a backend system in a user specific application of a portable touch-screen device, wherein the calendar objects comprise data, wherein the backend system comprises customized categories of the data, the categories being specific for the user, the method comprising at the device:
providing a request for at least part of the calendar objects to the backend system;
receiving a first part of the data and at least part of the customized categories as a response to the request;
displaying the received data on a graphical user interface of the device according to instructions associated with the received categories. For example, the instructions are directly comprised in the categories. In another example, based on the received categories, the device will request the relevant instructions from its local memory.

In another aspect, the invention relates to a portable touch-screen device for visualizing calendar objects stored in a backend system in a user specific application of the portable touch-screen device, wherein the calendar objects comprise data, wherein the backend system comprises customized categories of the data, the categories being specific for the user, the device comprising a processor for controlling the device and a memory for storing machine executable instructions, wherein execution of the instructions causes the processor to:
providing a request for at least part of the calendar objects to the backend system;
receiving a first part of the data and at least part of the customized categories as a response to the request;
displaying the received data on a graphical user interface of the device according to instructions associated with the received categories.

In another aspect, the invention relates to a computer program product comprising computer executable instructions to perform any of the method steps as claimed in any of the previous method claims.

Calendar software may implement calendar processes by modeling calendar data as calendar objects with data exchange between the objects. The calendar data provided via the calendar objects can be accessed through mechanisms such as graphical user interfaces, forms, and analytical reports. Traditionally, user interfaces providing access to calendar objects conveyed limited information about the attributes associated with the calendar objects. User interface that provide a calendar interface have presently been limited in their implementation.

Current mobile applications do not provide the functionality to fetch calendar objects from a backend system along with analytic integration of each calendar object and integrate into a calendar interface of an application. Current applications are also restrictive, in that changes and edits of the calendar objects and their respective attributes or states can't be made within a real-time view of a calendar interface.

Thus, there remains a need in the art for a system for visualizing calendar objects stored in a backend system and rendered in a real-time navigable time view. There also remains a need in the art to integrate calendar objects in a calendar application where the application is customizable to the rendered calendar objects.

Further described herein are a system and method that provide for visualizing calendar objects stored in a backend system for display in a user interface. Calendar objects are retrieved from the backend system. Metadata from the calendar objects are customized and sorted into a plurality of categories. The calendar objects are changed into a necessary data format for transmittal and transmitted to the application displayed on the user interface. During runtime, custom actions pertaining to each calendar object are dynamically rendered based on the backend customization of the metadata. Custom actions include, but are not limited to, the creation or updating of entries in the application, triggering of workflow, sending email, triggering alerts, etc.

In particular, the exemplary embodiments and/or exemplary methods are directed to a system and method for visualizing calendar objects stored in a backend system in an application. The system and method include a mobile device that executes an application that retrieves the calendar objects stored in the backend system and sorts metadata of the calendar objects into customized categories. The calendar objects can also be integrated with analytics corresponding to the calendar objects. Before transmission from the backend system to the application on the mobile device, the calendar objects can be converted into a necessary data format for transmission by a gateway. After conversion, the calendar objects are transmitted to the application through a platform, such as a Sybase platform™.

During rendering time, custom actions to be performed by calendar entities are dynamically generated based on backend customizing and metadata and bind to the calendar entity (or object). Visual representations of the calendar objects can be displayed in a user interface of the mobile device. Analytics of the calendar objects can also be displayed in the user interface.

In an example embodiment, the application on the mobile device is a calendar application. Upon user interaction with the user interface a custom action may be trigger, this action may lead for example to, but not limited to, a new calendar entry, update, deletion, navigation, search, etc. In this embodiment, the calendar objects and the calendar object attribute values can both be edited in real-time within a calendar view of the calendar application. The calendar application can be configured to dynamically adapt to each rendered calendar object.

Further described is:

A method for visualizing calendar objects stored in a backend system in an application, the method comprising:
retrieving the calendar objects stored in the backend system;
classifying data of the calendar objects into customized categories;
during runtime, dynamically generating custom actions to be performed to each of the calendar objects based on customization of the data of the calendar objects;
performing the custom actions based on an interaction by a user; and
displaying visual representations of the calendar objects with their associated custom actions in a user interface.

For example the application is at least one of a calendar application, a timeline, and a multiple time dimension application.
For example the method further comprises integrating the calendar objects with analytics corresponding to the calendar objects.
For example the method further comprises transmitting the calendar objects to the application through a platform.
For example the method further comprises converting the calendar objects into a necessary data format for transmission by a gateway.

For example the calendar objects can be edited in real-time within a calendar view of the calendar application.

For example calendar object attribute values can be edited in real-time within a calendar view of the calendar application.

For example the calendar application dynamically adapts to each rendered calendar object.
For example the method further comprises displaying the analytics of the calendar objects in the user interface.

Further described is a device having an application stored thereon to visualize calendar objects stored in a backend system in the application, the device comprising:
an arrangement performing the following:
   retrieving the calendar objects stored in the backend system;
   classifying data of the calendar objects into customized categories;
   during runtime, dynamically generating custom actions to be performed to each of the calendar objects based on customization of the data of the calendar objects;
   performing the custom actions based on an interaction by a user; and
   displaying visual representations of the calendar objects based on an execution of the custom actions in a user interface.

Further described is an apparatus for visualizing calendar objects stored in a backend system in an application, the apparatus comprising:
a mobile device; and
a calendar application displayed on a user interface of the mobile device, the calendar application being executed to:
   retrieve the calendar objects stored in the backend system;
   classify data of the calendar objects into customized categories;
   integrate the calendar objects with analytics corresponding to the calendar objects;
   convert the calendar objects into a necessary data format for transmission by a gateway;
   retrieve the calendar objects through a platform;
   during runtime, dynamically generate custom actions to be performed to each of the calendar objects based on customization of the data of the calendar objects;
   perform the custom actions based on an interaction by a user; and
   display visual representations and analytics of the calendar objects based on an execution of the custom actions in a user interface.

Further described is a system for visualizing calendar objects stored in a backend system, the system comprising:
at least one backend server storing calendar objects;
a computer system running software to communicate to a mobile device;
the mobile device executing an application for display on an interface of the mobile device, the application executed to:
   classify data of the calendar objects into customized categories;
   retrieve the calendar objects from the at least one backend server;
   convert the calendar objects into a necessary data format for transmission by a gateway;
   during runtime, dynamically generate and assign custom actions to be performed to each of the calendar objects based on backend customization of the calendar objects;
   perform the custom actions based on an interaction by a user; and
   display visual representations and analytics of the calendar objects based on an execution of the custom actions in interface of the mobile device.

### BRIEF DESCRIPTION OF THE DRAWINGS

In the following preferred embodiments of the invention are described in greater detail in which:

Figure 1 is a diagram of system architecture for retrieving the calendar objects and corresponding analytics from a backend system according to an embodiment.

Figure 2 is a diagram of an architecture diagram of the related calendar object metadata categories, retrieved from a backend system according to an embodiment.

Figure 3 is a diagram of a process for retrieving calendar objects from a backend server at runtime according to an embodiment.

Figure 4 is a diagram of representing the result of a custom action, presenting transaction data and metadata together with additional custom actions all dynamically rendered at runtime based on the backend customizing according to an embodiment.

Figure 5 is a diagram of a graphical user interface that displays calendar objects dynamically rendered at runtime according to an embodiment.

Figure 6 is a diagram of the layout of a user interface displaying calendar objects dynamically rendered at runtime according to an embodiment.

Figure 7 is a diagram of the user interface displaying calendar objects alongside detail boxes containing calendar object information dynamically rendered at runtime according to an embodiment.

### DETAILED DESCRIPTION

The subject matter will now be described in detail for specific preferred embodiments, it being understood that these embodiments are intended only as illustrative examples and is not to be limited thereto these embodiments.

Embodiments may discuss a system and method for retrieving calendar objects stored in a backend system and integrating into a navigable time view of an application displayed in a user interface. Calendar objects may be retrieved from the backend system. Metadata from the calendar objects may be customized and sorted into a plurality of categories. The calendar objects may be changed into a necessary data format for transmittal and transmitted to the application displayed on the user interface. During runtime, custom actions pertaining to each calendar object may be dynamically rendered based on the backend customization of the metadata. In an embodiment, the custom action may be triggered upon user interaction with the application and the device. Custom actions may include the creation or update of entries in the application, navigation in time, visualization of analytics, raising an alert, triggering workflow, etc.

Each of the calendar objects may be provided its own space and position in time so that none of the retrieved calendar objects overlap in position. The calendar objects attributes of the retrieved calendar objects may be edited or changed in real-time in the navigable time view of the application. The retrieved calendar objects may be integrated with calendar analytics that are specific to each calendar object or to all of the calendar objects displayed in the user interface.

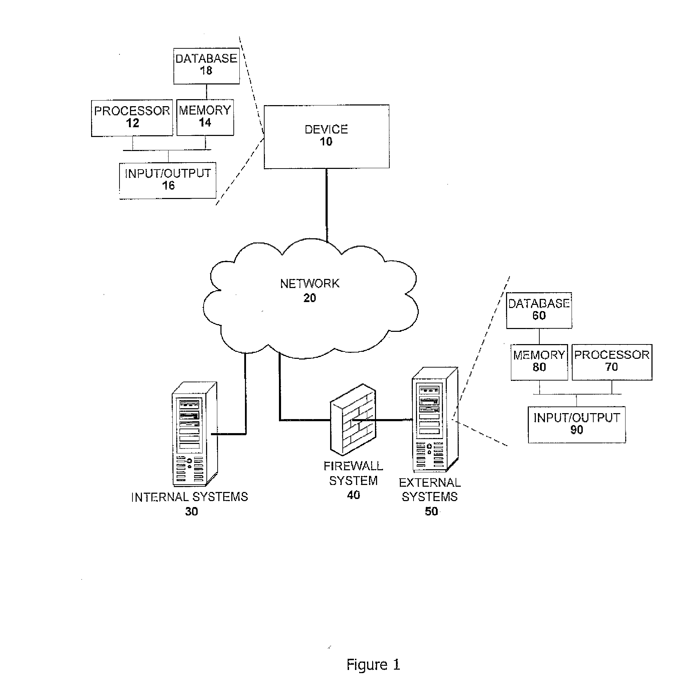

FIG. 1 illustrates an architecture of the system for retrieving the calendar objects and corresponding analytics from a backend system according to an embodiment. In an embodiment, device **10** may be a hand-held device, personal digital assistant (PDA), television set-top Internet appliance, mobile telephone, smart phone, tablet, Android™ device, iPod™, iPhone™, iPad™, Windows™ based device, etc., or as a combination of one or more thereof, or other comparable device. A mobile application, such as for example, a calendar application, may be executed on device **10.** This mobile application may be displayed in user interface that is displayed on a screen of the device **10**.

The calendar entries in the application may be updated by connecting device **10** to one or more backend computer systems or networks to retrieve new or updated calendar objects. The calendar objects may be stored in one or more database in the backend system. When the calendar objects are retrieved, the objects may be translated to a data protocol by a gateway that may be part of a firewall system **40.** Device **10** may connect to a gateway through a platform that provides a secured connection for connectivity.

The backend systems storing the calendar objects may be separated into internal backend systems and external backend systems. Device **10** may connect to internal backend systems **30** through a network **20.** Device **10** may also connect to external backend systems **50** through the network **20** and a firewall system **40.** The firewall system **40** may include a gateway and a platform such as, for example, Sybase™, to translate the calendar objects to a data protocol and provide a secured connection.

The existing internal backend systems **30** may include a server and may provide calendar data, including the calendar objects. The external backend systems **50** may include a server and may be maintained by a third party, such as an information service provider, and may contain calendar data, including the calendar objects, that may be updated by the third party on a periodic basis. The application on device **10** may interact with these external systems to obtain updates and new calendar objects, through a firewall system **40** separating the internal systems from the external systems. The gateway and platform provided by the firewall system **40** allow for a secure transmission of the calendar objects and other data to device **10.** In an embodiment, the functionality provided by the internal backend systems **30** and external backend systems **50** may be provided by the system running the application to retrieve calendar objects as well as analytics associated with the calendar objects.

Device **10** may include a processor **12,** a memory **14,** input/output interface **16,** and a database **18.** Database **18** may include any type of data storage adapted to searching and retrieval. The database **18** may include any SAP specific database such as HANA™, which may be an in-memory database, or other database system. Memory **14** may have a designated storage capacity that may allow for the storage of the calendar object attributes and corresponding analytics of the calendar objects, when a local save function is enabled. When a user accesses the locally saved calendar data, processer **12** may retrieve the data from memory **14.** In an embodiment, memory **14** may contain different components for retrieving, presenting, changing, and saving the local data. Memory **14** may include a variety of memory devices, for example, Dynamic Random Access Memory (DRAM), Static RAM (SRAM), flash memory, cache memory, and other memory devices. In an embodiment, memory **14** may be a memory device that may be easily incorporated in a mobile device.

The backend systems **30** and **50** may both contain a processor **70,** memory **80,** a database **60,** and an input/output interface **90,** all of which may be interconnected via a system bus. In various embodiments, both of the systems **30** and **50** may have an architecture with modular hardware or software systems that include additional systems communicating through one or more networks. The modular design may enable a calendar to add, exchange, and upgrade systems, including using systems from different vendors in some embodiments. The architecture may include embodiments that have different configurations than the example embodiment depicted in FIG. 1.

In an embodiment, memory **80** may contain different components for retrieving, presenting, changing, and saving data. Memory **80** may include a variety of memory devices, for example, Dynamic Random Access Memory (DRAM), Static RAM (SRAM), flash memory, cache memory, and other memory devices. Additionally, for example, memory **80** and processor **70** may be distributed across several different computers that collectively comprise a system.

Database **60** may include any type of data storage adapted to searching and retrieval. The database **60** may include any SAP specific database such as HANA, which may be an in-memory database, or other database systems such as Informix, Oracle, DB2, or Sybase™ etc. The databases of internal backend systems **30** and external backend system **50** may store calendar objects for retrieval by the application executed on device **10.**

Processor **70** may perform computation and control functions of a system and comprises a suitable central processing unit. Processor **70** may comprise a single integrated circuit, such as a microprocessor, or may comprise any suitable number of integrated circuit devices or circuit boards working in cooperation to accomplish the functions of a processor. Processor **70** may execute computer programs, such as object-oriented computer programs, within memory **80.**

The calendar objects for the calendar entries may be retrieved from the databases **60** of the internal backend systems **30** and the external backend systems **50** and rendered based on predefined metadata to enable the calendar application to represent different calendar contexts. FIG. 1 illustrates an architecture of the data structure that can be categorized into a set of metadata, Device **10** may connect through a network **20** to an internal backend system **30** or an external backend system **50,** through, for example a Sybase Unwired Platform™ in a firewall system **40.** The platform may provide administrative functions such as providing security keys that may enable the connection to external back end system **50** through a calendar gateway.

The calendar objects may represent a modeling of a particular calendar process of an industrial automation system. Metadata of any calendar objects may be stored on a database in internal backend system **30** or external backend system **50.** In an embodiment where there is an internal backend system, the calendar objects corresponding to the calendar processes may also be stored in a database of the internal backend system **30** in addition to the external backend system **50.** In an alternate embodiment, there may be no internal backend system, and the system may only include a single backend system, external backend system **50.** In this embodiment, the calendar objects corresponding to the calendar processes may be stored in a database of the external backend system **50.** When calendar objects are retrieved from database **60** of the external backend system **50,** a gateway may transform the internal data protocol into a necessary data format, such as, for example, OData™ format. In an embodiment, calendar objects may be transmitted to device **10** in the OData™ format through a platform.

The backend data of the calendar objects may be separated into categories representing data categories or analytic categories. The calendar objects may be in a necessary data format, such as, for example, OData™ format. In an example embodiment, backend data that corresponds to specific data categories may be rendered to customized categories. Examples of customized data categories may include but is not restricted to, "Marketing", "Sales", "Finance", "Activity", "Product", "Calendar Partner", "HR", etc. The retrieved data may be separated into any one of the customized categories. For example, if the backend data of a calendar object indicates that the calendar object may correspond to advertising information, the formatted data of the calendar object may be categorized in the "Marketing" category. In another example, if the backend data of a calendar object indicates that the calendar object corresponds to a specific product, the formatted data of the calendar object may be categorized in the "Product" category.

In a further example, customized data categories may include but is not restricted to "machine surveillance". "machine maintenance", "machine operation training". For example, if the backend data of a calendar object indicates that the calendar object may correspond to actually measured information at a certain machine of the industrial automation system, the formatted data of the calendar object may be categorized in the "machine surveillance" category. In another example, if the backend data of a calendar object indicates that the calendar object corresponds to a specific configuration, the formatted data of the calendar object may be categorized in the "machine maintenance" category.

In another embodiment, backend data that provides specific analytic information about a calendar object may be rendered to a specific customized analytic categories. Examples of customized analytic categories may include data coming from various analytic sources that may correlate to, but is not restricted to, "Calendar Intelligence™", "HANA™", and "Calendar Object™". This metadata may provide information pertaining to the analytics of the calendar object, and the corresponding retrieved formatted data may be separated into one of the customized categories.

Classifying the backend data of the calendar objects to customized categories may allow for the dynamic creation of the calendar entries in the calendar application. In an embodiment, each calendar object may have different actions, behavior, data, or analytics assigned to them at runtime based on the categorization of the metadata.

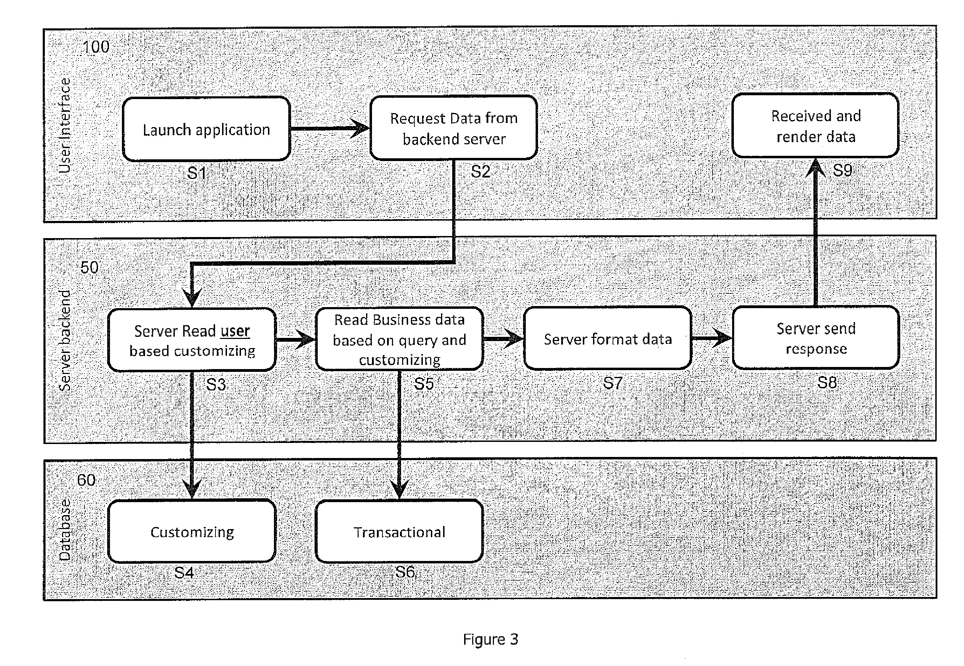

FIG. 3 illustrates a process for retrieving calendar objects from a backend server at runtime according to an embodiment. In an embodiment, both internal backend system **30** and external backend system **50** may be used as backend servers. In another embodiment, external backend system **50** may be the only backend server used, as illustrated in the process of FIG. 3. In step **S1,** a user may launch the mobile application on device **10.** The mobile application may be displayed in a user interface **100** on the device **10.** In step **S2,** the mobile application may request data from a backend server.

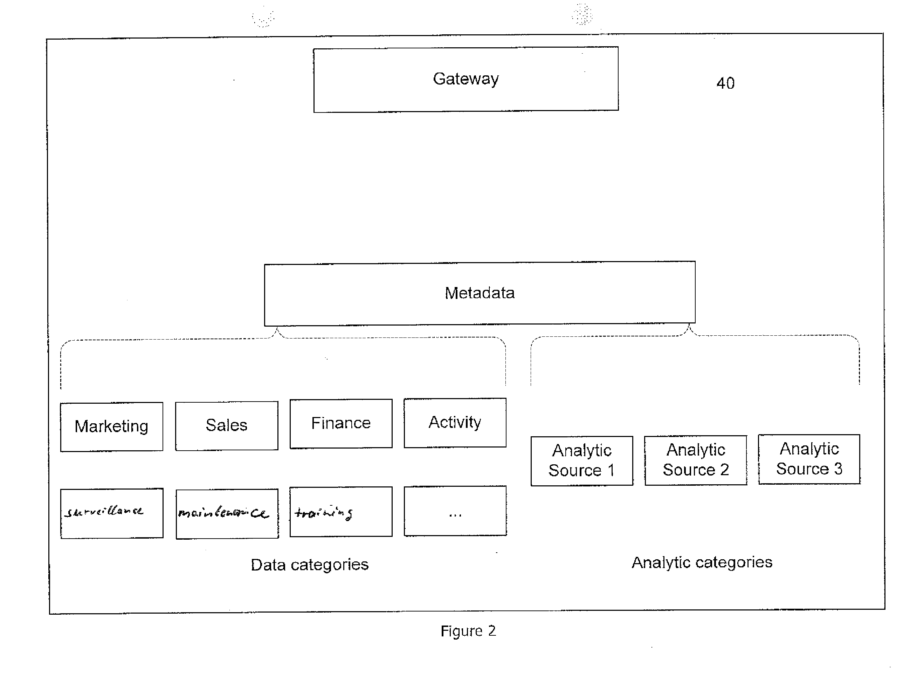

In step **S3,** external backend system **50** may read any performed user based customization of the stored calendar objects. Any further customization into categories may be formed in the database **60** of the external backend system **50** which may categorize the metadata of the stored calendar objects into the predefined categories in step **S4.** In step **S5,** the server may retrieve the calendar objects and corresponding calendar data based on the query by the mobile application and any customization. Step **S6** may provide any analysis of the retrieved calendar objects and data, if necessary. In step **S7,** external backend system **50** may format the calendar data including the calendar objects to a necessary data format for transmission, such as, for example, OData format, through a gateway. External backend system **50** may transmit a response through a platform to the mobile application in device **10** in step **S8**. In step **S9**, the mobile application may receive the transmitted data and render the data as data objects in the calendar application based on the customization of the objects in accordance with FIG. 2.

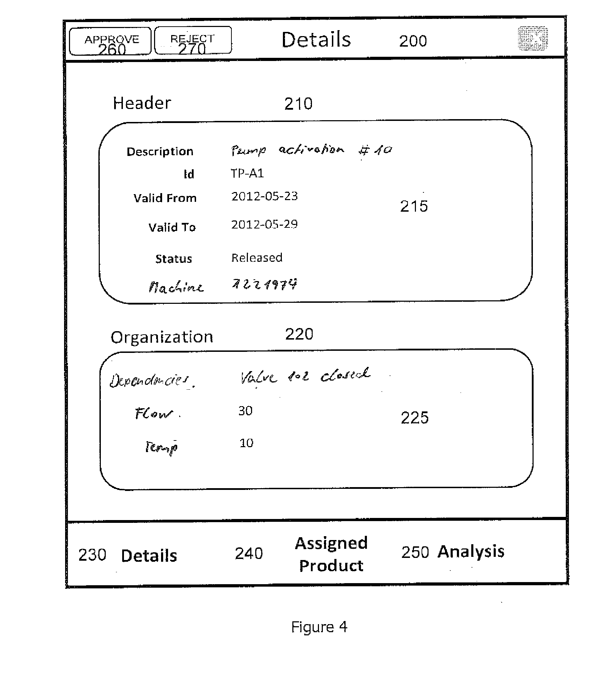

FIG. 4 illustrates the result of an executed custom action "display details" triggered by clicking/tapping a calendar object in the user interface. This resulting view, from the action execution, is rendered dynamically at runtime time based on the backend customization according to an embodiment.

Custom actions may include such actions as, but is not limited to, creating calendar entries, reading calendar objects, updating a calendar object, searching calendar objects, triggering a specific action or workflow, performing a search function, ungrouping calendar objects, etc. Each of these potential custom actions is assigned dynamically at runtime based on the backend customization of the metadata. In an embodiment, the result of an executed custom action, upon user interaction with the application or the device, may be the visualization of a modal view **200,** which may provide additional custom actions may require further user interactions with the application or the device. Further, the result of an executed custom action, upon user interaction with the application or the device, may be a further request for updated or new data on the calendar object that is currently subject to the custom action. In this case, the request will be directed to the backend system which in return will provide new data to the device.

Window **200** may provide information corresponding to a specific calendar object in a "Details" section of window **200.** In an embodiment, the result of the executed custom action may be presented in the "Details" section in window **200.** In another embodiment, a user may navigate to the "Details" section by clicking on tab **230**. Window **200** may include a first area **210** and a second area **220.** In the "Details" section of window **200,** the first area **210** may provide information about a calendar object, specifically the calendar object attribute values. In an embodiment where the calendar object is a pump activation event of a machine of the industrial automation system, area **210** may provide information about the pump control event. Area **210** may include section field **215** which may provide specific information about the calendar object. In an embodiment where the calendar object is a calendar control event, section field **215** may include, but is not limited to, section headers such as a description of the control event, an identification number, a start date of the control event, an end date of the control event, a status of the control event, and any corresponding machine to be controlled. All of the attributes and information in the sections of window **200** may be defined via customized categories in the backend and therefore rendered dynamically at runtime after the corresponding assigned custom action is triggered by the user.

In the "Details" section of window **200,** the second area **220** may provide further information about a calendar object, specifically the calendar object attribute values corresponding to the internal operation parameters of the machine. In an embodiment where the calendar object is a calendar control event, area **220** may provide information about the calendar control event. Area **220** may include section field **225** which may provide specific information about the calendar object. In an embodiment where the calendar object is a pump control event, section field **225** may include, but is not limited to, dependencies that may be relevant for performing the control event, a current flow of liquid, and a current operation temperature of the pump. All of the attributes and information in area **220** and section field **225** may be defined via customized categories in the backend and therefore rendered dynamically at runtime after the corresponding assigned custom action is triggered by the user.

Window **200** may include tabs **240** and **250.** Selection of tab **240** may provide a user with further information about a product associated with a specific calendar control event. Selection of tab **250** may display related customized analytics to a specific calendar object. All of information in tabs **240** and **250** may be defined via customized categories in the backend and therefore rendered dynamically at runtime after the corresponding assigned custom action is triggered by the user.

In an embodiment, window **200** may also include buttons **260** and **270** which may represent, in this example embodiment, specific custom actions such as changing the status of a calendar control event. The selection of buttons **260** or **270** may for example, allow for the changing of the status to approve or reject of the control event, which corresponds to an attribute of the calendar object.

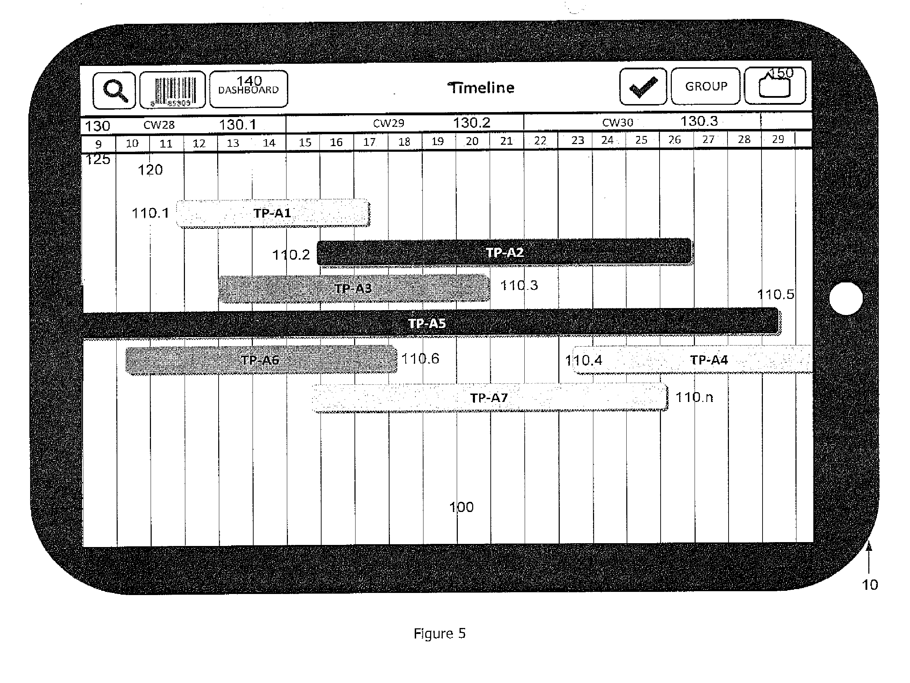

In the case in which a calendar object has been created for from the execution of a custom action, a visual representation of the calendar object may be dynamically created for display in the application. Visual representations associated with the calendar objects may be displayed on the user interface **100** of device **10** as visual bars. FIG. 5 illustrates a graphical user interface **100** that displays calendar objects dynamically rendered at runtime on device **10** according to an embodiment.

Each visual bar may present information about a dynamically rendered calendar object. In the example embodiment of FIG. 5, visual bars **110.1-110.n** may be displayed on user interface 100. The number of visual bars may correspond to the number of calendar objects, as each visual bar may map to a specific calendar object of the calendar enterprise software. The visual bars may be rendered during runtime.

The information in visual bars **110.1-110.n** may represent calendar objects of the calendar enterprise software. The calendar objects being displayed in visual bars **110.1-110.n** may represent a modeling of a particular calendar process. In an example embodiment, the visual bars **110.1-110.n** may correspond to information related to products, calendar control events, production progress, etc. Each of the calendar objects represented by a corresponding visual bar may include **attributes** that have been assigned via the metadata customized categories in the backend in FIG. 2. Attributes may include, for example, a specified time period, a specified product, control information, product information, etc. In an example embodiment where the calendar object corresponds to a calendar control event, attributes of the calendar object may include the control event period of the control event, including a start and end date and the product or machine for which the control event applies, including information pertaining to the product.

The attributes of calendar objects displayed user interface **100** may indicate a range of values. For example, in an embodiment where the calendar objects correspond to calendar control events, each of the calendar objects in visual bars **110.1-110.n** may include one or more attributes indicating the time period of the calendar control event. The time period may be implemented by either defining a single time period attribute associated with the calendar object or by defining a start date attribute and an end date attribute associated with the calendar object.

The size of the visual bars **110.1-110.n** in user interface **100** may be increased or decreased relative based on a selection by a user of the displayed time interval scales of the calendar application. In an embodiment, multiple displayed time interval ranges **125** and **130.1-130.2** may be displayed in user interface **100.** The displayed time intervals may represent a range of values associated with at least one calendar object attribute. The visual bars may be positioned in the calendar application relative to the size of the displayed time intervals of the horizontal axis. In an embodiment, a first selection for a time interval scale may be made for displayed range **125.** In the example embodiment in FIG. 5, range **125** may be selected to correspond to a daily time period. In this embodiment, the entries in time range **125** may correspond to subsequent days in the overall calendar timeline of the application. In alternate embodiments, the time interval scale for range **125** may be selected to, but is not limited to, correspond to a weekly, monthly, bi-monthly, quarterly, bi-annually, or annual scale.

Similarly, a selection may be made for the time interval scale for displayed range **130.** In the example embodiment in FIG. 5, range **130** may be selected to correspond to a weekly time period. In this embodiment, the entries in time range **130** may correspond to subsequent weeks in the overall calendar timeline of the application. Each entry **130.1-130.3** in range **130** may map to a subset of range **125.** For example, in the example embodiment of FIG. 5, days 15 to 21 in range **125** may correspond to calendar week 29 of entry **130.2.** In alternate embodiments, the time interval scale for range **130** may be selected to, but is not limited to, correspond to a monthly, bi-monthly, quarterly, bi-annually, annual, or period of multiple years.

The size of visual bars **110.1-110.n** may change dependent on the selection of the time interval scales for ranges **125** and **130.** In an embodiment where range **125** is selected to correspond to a daily time period, visual bars **110.1-110.n** may increase in size. In an embodiment where range **125** is selected to correspond to a weekly, monthly, bi-monthly, quarterly, bi-annually, or annual scale, the size of visual bars **110.1-110.n** may decrease. The size of visual bars **110.1-110.n** may decrease as larger time periods are selected.

The visual bars **110.1-110.n** visualized in the user interface may be positioned relative to the displayed time intervals. The calendar objects associated with each visual representation and specific detail box may include calendar object attribute values in common with other calendar objects that are also visualized in the user interface **100.** User interface **100** may include a button **140** which may allow for the display of the customized analytics of a calendar object in a generated dashboard chart (not shown). The dashboard chart may provide an analytic snapshot view of one or more calendar objects in the application. In an embodiment, the dashboard chart may be automatically adjusted based on calendar entry related content.

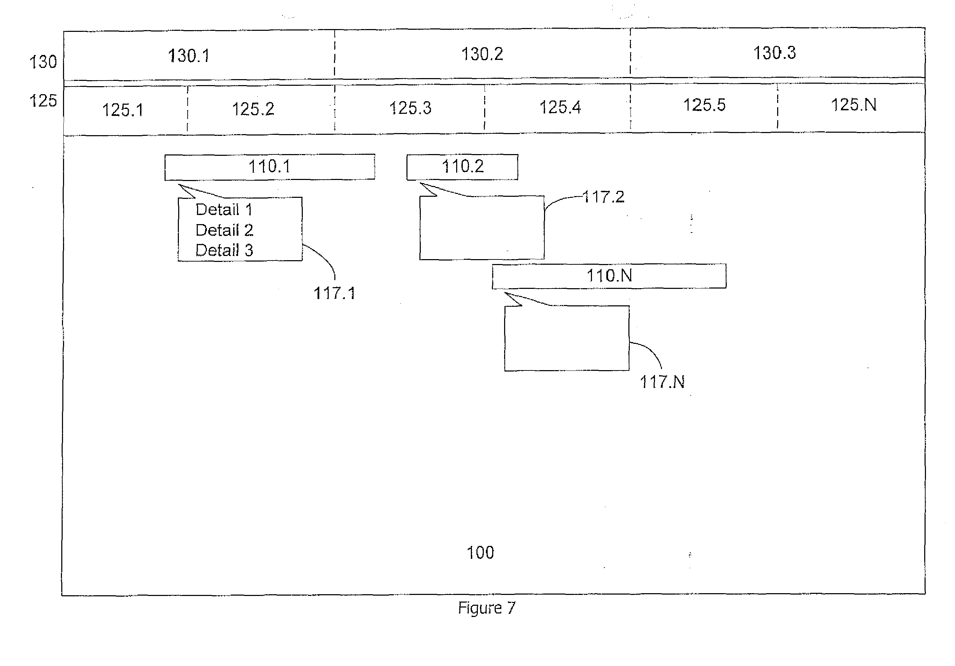

User interface **100** may also include button **150** which upon selection, may allow for detail boxes **117.1-117.n** to be displayed or hidden in the user interface **100.** Detail boxes **117.1-117.n** may include information about the corresponding calendar object. FIG. 7, and the related description discusses in more detail the detail boxes **117.1-117.n.**

In an alternate embodiment, the calendar objects represented by visual bars **110.1-110.n** may be edited by selected the corresponding visual bar. This may be accomplished in a device **10** with a touch screen by touching the corresponding visual bar, or in other devices, through clicking using a mouse, trackball, keypad, keyboard, etc.

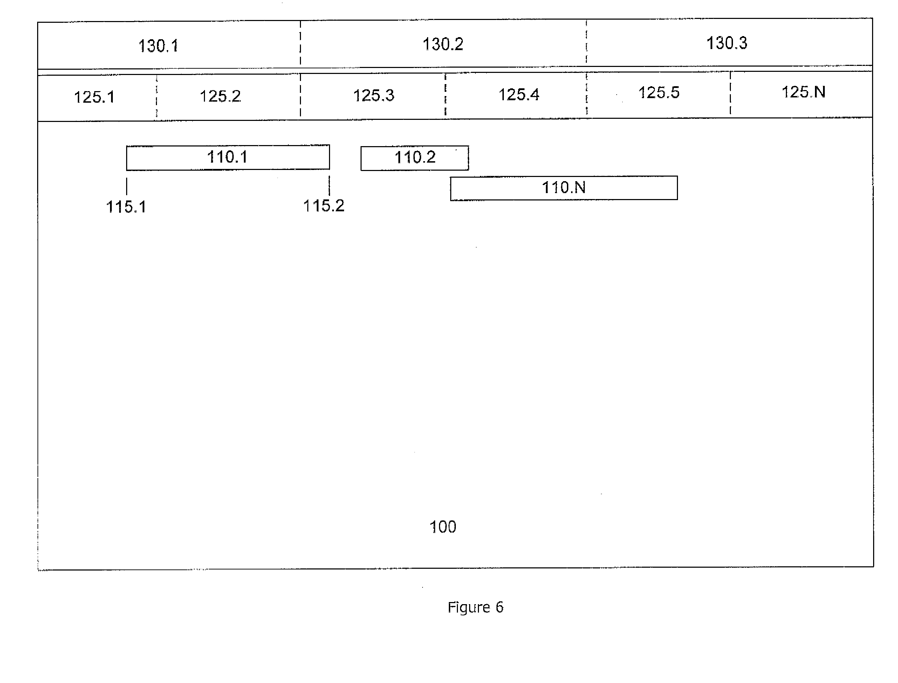

FIG. 6 further illustrates the layout of the user interface **100** displaying calendar objects dynamically rendered at runtime on device **10** according to an embodiment. In an embodiment, the calendar objects may be displayed on user interface **100** in an organized manner to visually convey information about the calendar objects. The calendar objects may be displayed in visual bars **110.1-110.n** on the user interface **100** based on the triggered custom actions.

Visual bars **110.1-110.n** may be visually displayed on the user interface **100** based on the selection of the display time intervals scales for ranges **125** and **130.** In an example embodiment, displayed time ranges **125** and **130** may represent time periods. Displayed time range **125** may be divided into units **125.1-125.n** that may correspond to a specified time period, such as, for example, a daily time period. In other embodiments, time range **125** may be divided into time periods based on a monthly, quarterly, or annual basis. Displayed time range **130** may be divided into units **130.1, 130.2**, and **130.3,** as in the example embodiment of FIG. 6, that may correspond to a specified time period. The time period for range **130** may correspond to a range that is bigger than the selected time period for range **125.** For example, if range **125** is divided into daily time periods, range **130** may be selected to correspond to monthly time periods. In an alternate embodiment where the selected time intervals for range **130** have been selected to be calendar years, the intervals for range **125** may be selected, for example, to correspond to calendar quarters.

In the example embodiment in FIG. 6, range **125** may be displayed in the user interface **100** above the visual bars. Range **130** may be displayed directly above range **125** in the user interface **100.**

In an embodiment, the visual bars **110.1-110.n** displayed on the user interface **100** may be positioned and presented based on respective attribute values of the calendar objects relative to the selected time interval scales of ranges **125** and **130.** Each visual bar **110.1-110.n** may include attributes indicating, for example, the calendar control event period of the respective calendar control event calendar object. The visual bars **110.1-110.n** may be presented to visually convey the span of the calendar control event periods, and the start/end of the calendar control event periods. Each of the visual bars **110.1-110.n** may include a start date **115.1** and an end date **115.2** where the visual bar begins and ends in the user interface **100.** In an example embodiment where the calendar objects correspond to a calendar control event, start date **115.1** may correspond to the start of a control event or buying period, etc. Conversely, end date **115.2** may correspond to the end of a control event or buying period, etc.

The size of the visual bars **110.1-110.n** as displayed in user interface **100** may depend on the selected time intervals in ranges **125** and **130.** As the time intervals scales of the ranges **125** and **130** are selectively increased or decreased by a user, the size of the visual bars may change based on the selection.

User interface **100** may also display visual bars that correspond to other time periods in ranges **125** and **130.** For example, user interface **100** may display calendar control events in a current year, with the visual representation displayed in interface **100** determined by selection of ranges **125** and **130.** A user may however, desire to view previous control events in a previous year, for example, or future control events is a subsequent year. In an example embodiment, a user may scroll to a previous time period to view previous control events by scrolling to the left using his or her finger where device **10** has a touch screen, or a mouse, a keyboard, a keypad, a trackball, etc., for other devices. The displayed time interval units **125.1-125.n** may display new time periods corresponding to the previously selected year, incremented by the selected time interval scale for range **125.** Displayed time interval units 130.1-130.3 may also display new time periods corresponding to the previously selected year, incremented by the selected time interval scale for range **130.**

In an alternate embodiment, a user may scroll to a future time period to view any planned future calendar control events. The user may scroll to the right by using his or her finger where device **10** has a touch screen, or a mouse, a keyboard, a keypad, a trackball, etc., for other devices. The displayed time interval units **125.1-125.n** may display new time periods corresponding to the future time period, incremented by the navigated time interval scale for range **125.** Displayed time interval units **130.1-130.3** may also display new time periods corresponding to the future time period, incremented by the navigated time interval scale for range **130.**

In an alternate embodiment, the calendar objects represented by visual bars **110.1-110.n** may be edited by selected the corresponding visual bar. This may be accomplished in a device **10** with a touch screen by touching the corresponding visual bar, or in other devices, by a mouse, trackball, keypad, keyboard, etc.

FIG. 7 illustrates the user interface **100** displaying calendar objects alongside detail boxes containing calendar object information dynamically rendered at runtime on device **10** according to an embodiment. In an embodiment, the calendar objects may be displayed on user interface **100** in an organized manner to visually convey information about the calendar objects. The calendar objects may be displayed in visual bars **110.1-110.n** on the user interface **100.** After the performance of a dynamic custom action, like clicking/tapping a visual bar **110.1-110.n,** a detail view of the calendar object may be displayed in accordance with the embodiment in FIG. 4.

Visual bars **110.1-110.n** may be visually displayed on the user interface **100** based on the selection of the display time intervals scales for ranges **125** and **130** which may be divided into units **125.1-125.n** and **130.1-130.3** that correspond to a specified time period. As in the example embodiment in FIG. 6, visual bars **110.1-110.n** displayed on the user interface **100** may be positioned and presented based on respective attribute values of the calendar objects relative to the selected time interval scales of ranges **125** and **130,** with the size of the visual bars dependent on the selected time intervals.

Each visual bar **110.1-110.n** may include attributes indicating, for example, the calendar control event period of the respective calendar control event calendar object. Details about the calendar object may be displayed in detail boxes **117.1-117.n.** In the example embodiment of FIG. 7, detail box **117.1** may correspond to information about the calendar object in visual bar **110.1.** This information may include or correspond to calendar object attributes, related images, graphics, charts, media, videos, etc. Similarly, detail box **117.2** may correspond to information about the calendar object attributes in visual bar **110.2,** and detail box **117.n** may correspond to information about the calendar object attributes in visual bar **110.n.** In an embodiment, the number of detail boxes displayed in user interface **100** may be equal to the number of visual bars displayed in user interface **100.** The number of detail boxes may also correspond to the number of calendar objects.

In an embodiment, the detail boxes **117.1-117.n** may be displayed in the user interface **100** only after an action has been performed on a specific visual bar **110.1-110.n.** An action performed may include, for example, clicking on button **150** with a mouse, trackball, keypad, or keyboard, etc., or touching a visual bar **110.1-110.n** in a device **10** which has a touch screen. In an alternate embodiment, each detail box **117.1-117.n** may only be displayed after the corresponding visual bar is displayed. In this alternate embodiment, detail box **117.1** may only be displayed if a user selects visual bar **110.1.** Similarly, detail box **117.2** may only be displayed if a user selects visual bar **110.2.** All remaining detail boxes, including **117.n,** may only be displayed, if the remaining visual bars, including **110.n,** are individually selected.

In an alternate embodiment, detail boxes **117.1-117.n** may be displayed even if no actions were performed on the respective visual bars. In this alternate embodiment, all detail boxes **117.1-117.n** may be displayed without the need for a user to perform any actions on visual bars **110.1-110.n** by clicking or selecting the respective visual bar. The settings of the application may be configured to enable the display of the detail boxes respectively concurrently with the visual bars without the need to individually select the visual bars. The application may also be configured to disable the display of the detail boxes. In an embodiment where the detail boxes **117.1-117.n** are displayed concurrently with visual bars **110.1-110.n,** disabling the display of the detail boxes may remove the detail boxes **117.1-117.n** from the user interface **100.** The detail boxes **117.1-117.n** may also be removed by the selection of button **150.**

A user may selectively scroll through the application to view the visual bars and corresponding detail boxes for past and future time periods. This may accomplished by scrolling left or right with a user's finger on a touch screen, or scrolling left or right on a mouse, trackball, keypad, keyboard, etc. In an example embodiment, a user may scroll to a previous time period to view previous control events by scrolling to the left using his or her finger where device **10** has a touch screen, or a mouse, keyboard, keypad, trackball, etc., for other devices. The displayed time interval units **125.1-125.n** may display new time periods corresponding to the previously selected year, incremented by the selected time interval scale for range **125.** Displayed time interval units **130.1-130.3** may also display new time periods corresponding to the previously selected year, incremented by the selected time interval scale for range **130.** User interface **100** may display the corresponding visual bars and detail boxes for control events that occurred in a selectively viewed previous time period.

A user may also selectively scroll through the application to view future time periods. The user may scroll to the right by using his or her finger where device **10** has a touch screen, or a mouse, keyboard, keypad, trackball, etc., for other devices. The displayed time interval units **125.1-125.n** may display new time periods corresponding to the future selected time period, incremented by the selected time interval scale for range **125.** Displayed time interval units **130.1-130.3** may also display new time periods corresponding to the future selected time period, incremented by the selected time interval scale for range **130.** User interface **100** may display the corresponding visual bars and detail boxes for control events that occurred in a selectively viewed future time period.

The exemplary method and computer program instructions may be embodied on a machine readable storage medium such as a computer disc, optically-readable media, magnetic media, hard drives, RAID storage device, and flash memory. In addition, a server or database server may include machine readable media configured to store machine executable program instructions. The features of the embodiments of the present invention may be implemented in hardware, software, firmware, or a combination thereof and utilized in systems, subsystems, components or subcomponents thereof. When implemented in software, the elements of the invention are programs or the code segments used to perform the necessary tasks. The program or code segments can be stored on machine readable storage media. The "machine readable storage media" may include any medium that can store information. Examples of a machine readable storage medium include electronic circuits, semiconductor memory device, ROM, flash memory, erasable ROM (EROM), floppy diskette, CD-ROM, optical disk, hard disk, fiber optic medium, or any electromagnetic or optical storage device. The code segments may be downloaded via computer networks such as Internet, Intranet, etc.

Although the invention has been described above with reference to specific embodiments, the invention is not limited to the above embodiments and the specific configurations shown in the drawings. For example, some components shown may be combined with each other as one embodiment, or a component may be divided into several subcomponents, or any other known or available component may be added. The operation processes are also not limited to those shown in the examples. For example, features and embodiments described above may be combined with and without each other. The present embodiments are therefore to be considered in all respects as illustrative and not restrictive. The scope of the invention is indicated by the appended claims rather than by the foregoing description, and all changes that come within the meaning and range of equivalency of the claims are therefore intended to be embraced therein.

## Claims

1. A method for visualizing calendar objects stored in a backend system (30; 50) in a user specific application of a portable touch-screen device (10), wherein the calendar objects comprise data, wherein the backend system (30; 50) comprises customized categories of the data, the categories being specific for the user, the method comprising at the backend system (30; 50):
receiving a request for at least part of the calendar objects from the application;
retrieving the requested calendar objects stored in the backend system (30; 50);
retrieving the user specific categories;
selecting a first part of the data of the calendar objects according to the customized categories;
providing the selected data and at least part of the customized categories as a response to the request to the application.

2. The method of claim 1, wherein a part of the categories is associated with instructions for translating of the selected data into a user specific format, wherein the method further comprises translating by the backend system (30; 50) at least part of the selected data according to the user specific instructions.

3. The method of any of the previous claims, wherein the selected data of the calendar objects has a smaller size than the calendar objects.

4. The method of any of the previous claims, wherein a category of the customized categories comprises instructions to the application how to handle the selected data of the calendar objects, wherein said instructions are comprised in the provided part of the customized categories.

5. The method of claim 4, wherein the instructions how to handle the selected data of the calendar objects comprises instructions
how to render the selected data on a graphical user interface of the portable touch-screen device (10) and/or
how to react to a user input at the portable touch-screen device (10), wherein the input is related to the selected data and/or
how to perform an analysis of the selected data in response to a request of a user of the application.

6. The method of claim 4, wherein the instructions how to handle the selected data of the calendar objects comprises an authorization scheme for modifying and/or viewing the selected data by the user of the application at the application.

7. The method of any of the previous claims, wherein a part of the categories is associated with instructions for preprocessing of a second part of the data of the calendar objects, wherein the method further comprises at the backend system (30; 50) preprocessing the second part of the data of the calendar objects for obtaining preprocessed data and providing the preprocessed data as the response to the request to the application.

8. The method of claim 7, wherein the preprocessed data comprise image data.

9. A backend system (30; 50) for visualizing calendar objects stored in a backend system (30; 50) in a user specific application of a portable touch-screen device (10), wherein the calendar objects comprise data, wherein the backend system (30; 50) comprises customized categories of the data, the categories being specific for the user, the backend system (30; 50) comprising a processor for controlling the backend system (30; 50) and a memory for storing machine executable instructions, wherein execution of the instructions causes the processor to:
receiving a request for at least part of the calendar objects from the application;
retrieving the requested calendar objects stored in the backend system (30; 50);
retrieving the user specific categories;
selecting a first part of the data of the calendar objects according to the customized categories;
providing the selected data and at least part of the customized categories as a response to the request to the application.

10. A method for visualizing calendar objects stored in a backend system (30; 50) in a user specific application of a portable touch-screen device (10), wherein the calendar objects comprise data, wherein the backend system (30; 50) comprises customized categories of the data, the categories being specific for the user, the method comprising at the device (10):
providing a request for at least part of the calendar objects to the backend system (30; 50);
receiving a first part of the data and at least part of the customized categories as a response to the request;
displaying the received data on a graphical user interface of the device (10) according to instructions associated with the received categories.

11. The method of claim 10, wherein the instructions are comprised in the categories.

12. A portable touch-screen device (10) for visualizing calendar objects stored in a backend system (30; 50) in a user specific application of the portable touch-screen device (10), wherein the calendar objects comprise data, wherein the backend system (30; 50) comprises customized categories of the data, the categories being specific for the user, the device (10) comprising a processor for controlling the device (10) and a memory for storing machine executable instructions, wherein execution of the instructions causes the processor to:
providing a request for at least part of the calendar objects to the backend system (30; 50);
receiving a first part of the data and at least part of the customized categories as a response to the request;
displaying the received data on a graphical user interface of the device (10) according to instructions associated with the received categories.

13. A computer program product comprising computer executable instructions to perform any of the method steps as claimed in any of the previous method claims.
